# EUROPEAN PATENT SPECIFICATION

(11) **EP 3 208 124 B1**
(45) Date of publication and mention of the grant of the patent: **29.04.2020**
(21) Application number: 17156789.4
(22) Date of filing: 17.02.2017
(51) Int. Cl.: B60K 6/48, B60K 6/547, B60W 10/06, B60W 10/08, B60W 10/02, B60W 10/11, B60W 20/00, B60W 20/10

(54) **DRIVELINE OF A HYBRID VEHICLE, IN PARTICULAR OF AN INDUSTRIAL OR COMMERCIAL VEHICLE**
ANTRIEBSSTRANG EINES HYBRIDFAHRZEUGS, INSBESONDERE EINES INDUSTRIE- ODER NUTZFAHRZEUGS
TRANSMISSION D'UN VÉHICULE HYBRIDE, EN PARTICULIER D'UN VÉHICULE INDUSTRIEL OU COMMERCIAL

(30) Priority: 19.02.2016 IT UB20160874
(43) Date of publication of application: 23.08.2017
(73) Proprietor: Iveco S.p.A., 10156 Torino (IT)
(72) Inventor: PERRONE, Attilio, 16010 Serra Ricco (IT); AIMO BOOT, Marco, 10072 Caselle Torinese (IT)
(74) Representative: Fiume, Orazio

(56) References cited:
- EP-A1- 2 682 293
- EP-A1- 2 930 076
- WO-A1-2013/094409
- WO-A1-2014/033137
- DE-T5-112012 003 475
- KR-A- 20140 016 036

## Description

### Technical field of the invention

The invention relates to the field of vehicle drivelines, in particular the ones comprising a manual, automatic or robotized gearbox having its own processing unit and a secondary shaft that can be connected to the main drive shaft by means of a first secondary clutch, and with an electric drivetrain directly or indirectly associated with the main drive shaft.

This type of driveline is used in the field of industrial or commercial vehicles.

### State of the art

Hybrid vehicles can operate in at least three different modes:
- a pure electric mode, in which the sole electric drivetrain moves the vehicle,
- a pure thermal mode, in which the thermal drivetrain moves the vehicle,
- a hybrid mode, in which both the aforesaid drivetrains are active and connected to the driveline.

Commercial and industrial vehicles are well-known to have a significant mass, especially when they are loaded. In recent year, car manufacturers have started using hybrid or multimode drivelines, which though are not suitable for industrial applications.

Electric motors used in the industrial field are particularly heavy and large, so as to be capable of moving the vehicle even when it is completely loaded.

In switching conditions, which occur when the vehicle has to switch from a pure electric driving mode to a hybrid or pure thermal mode, the secondary shaft of the gearbox needs to be connected to the driveline in an efficient way.

In a known driveline arrangement, the main drive shaft coincides - and is one single piece together - with the secondary shaft of the gearbox and extends up to the differential of the driving axle.

In a hybrid vehicle, said main drive shaft is separated from the secondary shaft of the gearbox by a first secondary clutch, whereas the electric drivetrain is directly or indirectly associated with the main drive shaft.

Therefore, it is hard to synchronize the automatic gearbox prior to the closing of the first secondary clutch, with the consequence that the gearbox and the driveline - as a whole - are subjected to a significant stress. WO 2013/094409 A1 and EP 2 930 076 A1 disclose prior art whose features are in the preamble of claim 1_{.}

DE 11 2012 003475 T5 and EP 2 682 293 A1 disclose similar drivelines.

### Summary of the invention

The object of the invention is to provide a driveline of a hybrid vehicle, in particular of an industrial or commercial vehicle, which is adapted to ensure an efficient switching from the pure electric mode to a hybrid or pure thermal mode.

The driveline according to the invention implements an automatic or robotized gearbox, which comprises its own processing unit, which is at least capable of identifying an optimal transmission ratio in relation to the speed of the vehicle. Said processing unit autonomously identifies and selects the optimal transmission ratio.

The idea on which the invention is based is that of associating the speed sensor of the aforesaid processing unit of the gearbox to the main drive shaft, which is distinct and can be disconnected from the secondary shaft of the gearbox. By so doing, prior to a switching from a pure electric mode to a hybrid or pure thermal mode, as the main drive shaft is disconnected from the secondary shaft of the gearbox, the processing unit of the gearbox is deceived, thus acquiring a speed of the main drive shaft and not the one of the secondary shaft of the gearbox. Therefore, said processing unit is caused to select an optimal transmission ratio before the first secondary clutch is closed to stably interconnect the main drive shaft and the secondary shaft of the gearbox.

According to the invention, there is provided a driveline of a hybrid vehicle, in particular an industrial or commercial vehicle, according to claim 1.

According to the invention, a method for controlling a driveline of a hybrid vehicle according to claim 6 is also provided.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:

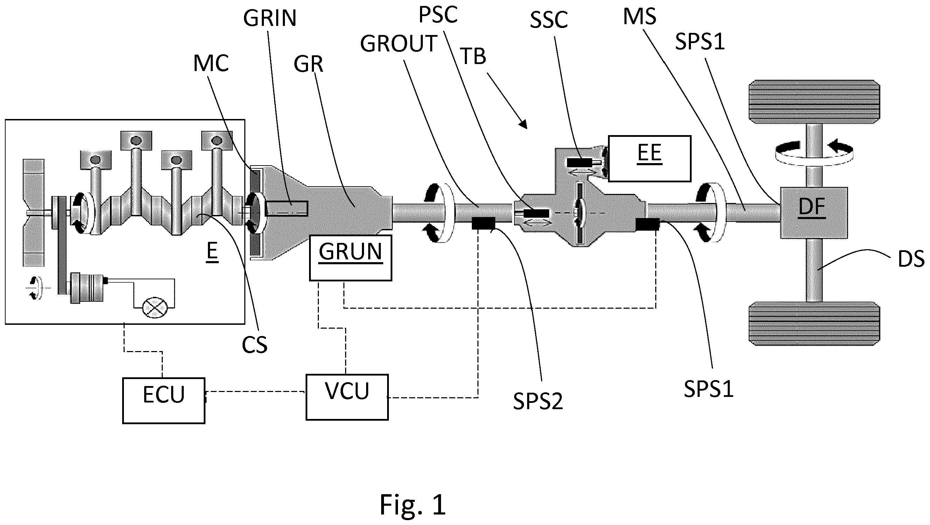

figure 1 shows an example of a driveline according to the invention.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

Figure 1 shows a preferred example of a vehicle driveline of a hybrid vehicle according to the invention.

On the left of the figure you can see a schematic representation of a thermal drivetrain E with four inline cylinders/pistons. Evidently, the thermal drivetrain can also have a different number or a different arrangement of the cylinders.

The thermal drivetrain E comprises a crankshaft CS, to which the pistons are connected.

The crankshaft of the thermal drivetrain is connected to the gearbox GR by means of a main coupling device MC, which preferably is a clutch with packable discs, when the gearbox is robotized, or a torque converter, when the gearbox is automatic.

The gearbox GR comprises an input shaft GRIN, usually called "primary shaft", connected to the thermal drivetrain E and an output shaft GROUT, generally called "secondary shaft", connected to the vehicle driving axle DS. Between the input shaft and the output shaft there are interposed a plurality of gears to obtain different discrete transmission ratios in known manners.

The gearbox GR comprises a processing unit GRUN configured to identify or select an optimal transmission ratio of the gearbox based on a signal of a first speed sensor SPS1, which, according to the invention, is connected to the main drive shaft MS, which is operatively interposed between the output shaft GROUT and the driving axle DS of the vehicle. The main drive shaft MS has a first end MS1 and a second end MS2, which is opposite the first one. The first end MS1 is adapted to be coupled to the output shaft GROUT by means of a first auxiliary clutch PSC, the second end MS2 is connected to the differential DF of the driving axle DS. The main drive shaft MS can be coupled to an electric drivetrain E, preferably in an intermediate point between the first end and the second end of the main drive shaft MS or, anyway, in such a way that the interaction between the main drive shaft and the electric drivetrain is independent/irrespective of the opening or closing condition of the first auxiliary clutch PSC and/or of the opening or closing condition of the main clutch, if present. According to a preferred variant of the invention, the interconnection among the main drive shaft, the secondary shaft of the gearbox and the electric drivetrain EE is preferably carried out by means of a so-called transfert box TB, which contains, in a casing, the interconnection organs between the main drive shaft and an electric drivetrain EE.

These organs preferably comprise a pair of gears to connect the rotor of the electric drivetrain to the main drive shaft, a second auxiliary clutch SSC to disconnect the rotor of the electric drivetrain from the main drive shaft MS, and the aforesaid first auxiliary clutch PSC, which, as mentioned above, interconnects the secondary shaft of the gearbox to the main drive shaft.

Therefore, according to the invention, instead of having the speed sensor SPS1 coupled to the secondary shaft of the gearbox GROUT, it is coupled to the main drive shaft MS. Hence, the operation of the processing unit GRUN, which controls the gearbox, is deceived/influenced by the opening or closing condition of the first auxiliary clutch PSC.

According to the invention, a second processing unit (VCU), is arranged to carry out the following steps in succession, in order to command a switching between a pure electric driving mode and a hybrid or pure thermal mode:
- activating the thermal drivetrain E,
- waiting for an optimal transmission ratio of the gearbox to be identified and entered, then
- monitoring a second rotation speed, measured by means of a second sensor SPS2, of the output shaft MCOPUT of the gearbox and acquiring the first speed of the main drive shaft,
- controlling the revolution speed of the thermal drivetrain E so as to force a difference between the first and the second speed below a predetermined threshold Th1,
- commanding the closing of the first secondary clutch PSC. Preferably, the VCU is interfaced with the processing unit controlling the internal combustion engine ECU, so as to control the thermal drivetrain.

Preferably, before the first auxiliary clutch is closed, the VCU varies, in positive or negative, the rotation speed of the thermal drivetrain E, so as to endure a gentle coupling of the thermal drivetrain to the driveline.

The step of waiting for the optimal transmission ratio to be entered also comprises waiting for the main clutch MC to be closed.

Preferably, the VCU is configured to deactivate the thermal drivetrain E and the first processing unit GRUM when the driveline steadily is in the pure electric driving mode and to reactivate the first processing unit GRUN when the thermal drivetrain E needs to be activated.

Preferably, the GRUN selects the optimal transmission ratio not only based on the measured speed of the main drive shaft, but also based on the speed of the thermal drivetrain E. In which case, the GRUN preferably is configured to select the neutral position when the speed of the thermal drivetrain is equal to zero, so as that the VCU does not need to deactivate the GRUN when it orders the switching off of the thermal drivetrain.

When the driveline operates in pure electric mode, the VCU is configured to maintain stably closed the second auxiliary clutch SSC. Vice versa, the second auxiliary clutch is ordered to open only after the closing of the first auxiliary clutch, namely after the reactivation of the thermal drivetrain and its proper insertion into the drive of the vehicle.

Preferably, the VCU is further configured to carry out the step of taking the thermal drivetrain to a predetermined rotation speed immediately after its activation, so as to allow the GRUN to identify an adequate transmission ratio, especially when the selection of the transmission ratio is carried out also on the base of the speed of the thermal drivetrain.

According to a preferred variant of the invention, the VCU is configured to carry out a preliminary step of acquiring the torque delivered by the electric drivetrain EE and of selecting the aforesaid predetermined rotation speed of the thermal drivetrain according to a torque map of the thermal drivetrain, so that the thermal drivetrain is capable of delivering a torque at least equal to the torque delivered by the electric drivetrain before the closing of the first auxiliary clutch.

It should be pointed out that the processing units GRUN, VCU and ECU are mutually interfaced by means of a CAN bus and, therefore, even though some sensors are connected to one of the processing units, the relative measured values are made public on the CAN network by the processing units. Therefore, the VCU is allowed to learn the speed the of secondary shaft GROUT of the gearbox by means of the sensor SPS2, which is directly connected to it, and the speed of the main drive shaft MS indirectly through the GRUN. Among the different items of information made public on the CAN network, there are the speed of the thermal drivetrain, the torque delivered by the electric drivetrain and by the thermal drivetrain, the speed of the main drive shaft and of the secondary shaft of the gearbox, besides the opening (disengagement) and closing (engagement) states of the clutches and the currently engaged gear of the gearbox. This invention can be advantageously implemented by means of a computer program comprising coding means for carrying out one or more steps of the method, when the program is run on a computer. Therefore, the scope of protection is extended to said computer program and, furthermore, to means that can be read by a computer and comprise a recorded message, said means that can be read by a computer comprising program coding means for carrying out one or more steps of the method, when the program is run on a computer.

Hence, the invention also relates to a computer program comprising program coding means for carrying out the steps described above, when said program is run on a computer, and to means that can be read by a computer and comprise a recorded program, said means that can be read by a computer comprising program coding means for carrying out said steps, when the program is run on a computer.

The non-limiting example described above can be subjected to variations, without for this reason going beyond the scope of protection conferred by the appended claims.

When reading the description above, a skilled person can carry out the subject-matter of the invention without introducing further manufacturing details. The information contained in the part concerning the state of art only serves the purpose of better understanding the invention and does not represent a declaration of existence of the items described.

## Claims

1. Driveline of a hybrid vehicle, in particular of an industrial or commercial vehicle, the driveline comprising:
- a gearbox (GR) having an input shaft (GRIN) adapted to be connected with a thermal drivetrain (E) and an output shaft (GROUT) to drive a driving axle (DS) of a vehicle and first processing means (GRUN) configured to identify an optimal transmission ratio based on a signal of a first speed sensor (SPS1),
- a main clutch (MC)interposed between said thermal drivetrain (E) and said input shaft (GRIN),
- a main drive shaft (MS), interposed between the output shaft (GROUT) and said driving axle (DS),
- a first auxiliary clutch (PSC) to interconnect said main drive shaft and said output shaft,
wherein said main drive shaft is associable with an electric drivetrain (EE) regardless of a state of opening or closing of said first auxiliary clutch (PSC) and wherein said first speed sensor is connected stably with said main drive shaft (MS) to measure a related first speed;
the driveline further comprising a second processing unit (VCU) arranged to carry out the following steps in succession to command a switching between a pure electric driving mode and a hybrid or pure thermal mode:
- activating said thermal drivetrain (E),
- waiting until said optimal transmission ratio of the gearbox has been entered, then
- monitoring a second rotation speed of said output shaft (GROUT) by means of a second speed sensor (SPS2) associated therewith and acquisition of said first speed,
- controlling a revolution speed of the thermal drivetrain so as to force a difference between said first and second speed below a predetermined threshold,
- commanding a closing of said first secondary clutch (PSC) ;
the driveline **being characterized in that** said second processing unit is configured to command a closing of said main clutch (MC) immediately after activation of said thermal drivetrain and before said identification of said optimal transmission ratio.

2. Driveline according to claim 1, wherein said second processing unit is configured to deactivate said thermal drivetrain (E), and wherein said first processing unit (GRUN) is configured to select a neutral position of the gearbox as long as said thermal drivetrain is maintained deactivated.

3. Driveline according to any one of the preceding claims 1 or 2, wherein said electric drivetrain (EE) is associated with said main drive shaft by means of a pair of transmission gears and a second auxiliary clutch (SSC) and wherein said second processing means are configured to maintain stably closed said second auxiliary clutch during a pure electric drive mode and to open said second auxiliary clutch only after said closing of said first auxiliary clutch.

4. Driveline according to any one of the preceding claims 1 to 3, wherein said second processing unit is further configured to carry out a step of taking said thermal drivetrain to a predetermined rotation speed after its activation to allow said identification of said optimal transmission ratio.

5. Driveline according to claim 4, wherein said second processing unit is further configured to carry out a preliminary step of acquiring a torque delivered by said electric drivetrain (EE) and of selecting said predetermined rotation speed of the thermal drivetrain according to a torque map of said thermal drivetrain, so as to allow said thermal drivetrain to deliver a torque at least equal to the torque delivered by the electric drivetrain before closing of the first auxiliary clutch.

6. Method for controlling a switching procedure of a driveline of a hybrid vehicle from a pure electric mode to a hybrid or pure thermal mode, in particular of an industrial or commercial vehicle, the driveline comprising:
- a gearbox (GR) having an input shaft (GRIN) adapted to be connected with a thermal drivetrain (E) and an output shaft (GROUT) to drive a driving axle (DS) of a vehicle and first processing means (GRUN) to identify an optimal transmission ratio based on a signal of a first speed sensor (SPS1),
- a main drive shaft (MS), interposed between the output shaft (GROUT) and said driving axle (DS),
- a first auxiliary clutch (PSC) to interconnect said main drive shaft and said output shaft,
- a first speed sensor (SPS1) stably connected with said main drive shaft to measure a related first speed
- a main clutch (MC) interposed between said thermal drivetrain (E) and said input shaft, the method comprising selecting said transmission ratio based on a first speed measured by said first speed sensor, prior to a closing of said first auxiliary clutch (PSC) to perform said switching, and said method further comprising the following steps:
- activating said thermal drivetrain (E),
- waiting until said optimal transmission ratio of the gearbox has been entered, then
- monitoring a second rotation speed of said output shaft (GROUT) by means of a second speed sensor (SPS2) associated therewith and acquisition of said first speed,
- controlling a revolution speed of the thermal drivetrain so as to force a difference between said first and second speed below a predetermined threshold,
- commanding a closing of said first secondary clutch (PSC), the method being **characterized by** further comprising the step of
- commanding a closing of said main clutch (MC) immediately after activation of said thermal drivetrain and before said identification of said optimal transmission ratio.

7. Commercial or industrial hybrid vehicle comprising a thermal drivetrain (E) and an electric drivetrain (EE) and a driveline according to any one of claims 1 to 5.

8. Computer program comprising computer program code means adapted to perform all the steps of claim 6, when said program is run on a computer.

9. A computer readable medium having a program recorded thereon, said computer readable medium comprising computer program code means adapted to perform all the steps of claim 6, when said program is run on a computer.

## Patentansprüche

1. Ein Antriebsstrang eines Hybridfahrzeugs, insbesondere eines Industrie- oder Nutzfahrzeugs, wobei der Antriebsstrang folgendes umfasst:
- ein Getriebe (GR) mit einer Antriebswelle (GRIN), ausgeführt, um mit einem thermischen Antriebsstrang (E) verbunden zu sein, und einer Abtriebswelle (GROUT), um eine Antriebsachse (DS) eines Fahrzeugs anzutreiben, und erste Verarbeitungsmittel (GRUN), ausgeführt, um ein optimales Übersetzungsverhältnis auf Grundlage eines Signals eines ersten Geschwindigkeitssensors (SPS1) zu ermitteln,
- eine Hauptkupplung (MC), angeordnet zwischen dem thermischen Antriebsstrang (E) und der Antriebswelle (GRIN),
- eine Hauptantriebswelle (MS), angeordnet zwischen der Abtriebswelle (GROUT) und der Antriebsachse (DS),
- eine erste Hilfskupplung (PSC) zur Verbindung der Hauptantriebswelle und der Abtriebswelle,
wobei die Hauptantriebswelle mit einem elektrischen Antriebsstrang (EE) verbunden werden kann, unabhängig des Zustands der Öffnung oder Schließung der ersten Hilfskupplung (PSC), und wobei der erste Geschwindigkeitssensor fest mit der Hauptantriebswelle (MS) verbunden ist, um eine entsprechende erste Geschwindigkeit zu messen;
wobei der Antriebsstrang weiter eine zweite Verarbeitungseinheit (VCU) umfasst, ausgeführt, um die folgenden Schritte aufeinanderfolgend auszuführen, um eine Umschaltung zwischen einem rein elektrischen Fahrmodus und einem hybriden oder rein thermischen Modus zu befehlen:
- Aktivieren des thermischen Antriebsstrangs (E),
- Warten, bis ein optimales Übersetzungsverhältnis des Getriebes erreicht wurde, dann
- Überwachen einer zweiten Umdrehungsgeschwindigkeit der Abtriebswelle (GROUT) mittels eines dieser zugeordneten zweiten Geschwindigkeitssensors (SPS2), und Ermitteln der ersten Geschwindigkeit,
- Steuern einer Drehzahl des thermischen Antriebsstrangs, um eine Differenz zwischen der ersten und der zweiten Geschwindigkeit unter einen vordefinierten Schwellenwert zu bringen,
- Befehlen einer Schließung der ersten Hilfskupplung (PSC);
wobei der Antriebsstrang **dadurch gekennzeichnet ist, dass** die zweite Verarbeitungseinheit ausgeführt ist, um ein Schließen der Hauptkupplung (MC) unmittelbar nach Aktivierung des thermischen Antriebsstrangs und vor Feststellung des optimalen Übersetzungsverhältnisses zu befehlen.

2. Ein Antriebsstrang nach Anspruch 1, wobei die zweite Verarbeitungseinheit dazu ausgeführt ist, den thermischen Antriebsstrang (E) zu deaktivieren, und die erste Verarbeitungseinheit (GRUN) dazu ausgeführt ist, eine neutrale Position des Getriebes auszuwählen, solange der thermische Antriebsstrang deaktiviert bleibt.

3. Ein Antriebsstrang nach einem der vorstehenden Ansprüche 1 oder 2, wobei der elektrische Antriebsstrang (EE) mit der Hauptantriebswelle durch ein Paar von Getrieben und eine zweiten Hilfskupplung (SSC) verbunden ist und wobei die zweiten Verarbeitungsmittel ausgeführt sind, um die zweite Hilfskupplung während eines rein elektrischen Fahrmodus stabil geschlossen zu halten und um die zweite Hilfskupplung nur nach Schließen der ersten Hilfskupplung zu öffnen.

4. Ein Antriebsstrang nach einem der vorstehenden Ansprüchen 1 bis 3, wobei die zweite Verarbeitungseinheit weiter ausgeführt ist, um einen Schritt auszuführen, den thermischen Antriebsstrang nach seiner Aktivierung auf eine vorbestimmte Drehzahl zu bringen, um die Feststellung des optimalen Übersetzungsverhältnisses zu ermöglichen.

5. Antriebsstrang nach Anspruch 4, wobei die zweite Verarbeitungseinheit weiter ausgeführt ist, um einen vorhergehenden Schritt auszuführen, ein Drehmoment zu erfassen, das vom elektrischen Antriebsstrang (EE) geliefert wird und um eine vorgegebene Drehzahl des thermischen Antriebsstrangs entsprechend einer Drehmoment-Kennlinie des thermischen Antriebsstrangs auszuwählen, sodass der thermische Antriebsstrang in der Lage ist, einen Drehmoment zu liefern, das mindestens gleich dem Drehmoment ist, das von dem elektrischen Antriebsstrang vor dem Schließen der ersten Hilfskupplung geliefert wird.

6. Verfahren zur Steuerung eines Umschaltvorgangs eines Antriebsstranges eines Hybridfahrzeugs von einem rein elektrischen Modus auf einen hybriden oder rein thermischen Modus, insbesondere eines Industrie- oder Nutzfahrzeugs, wobei der Antriebsstrang umfasst:
- ein Getriebe (GR) mit einer Antriebswelle (GRIN), ausgeführt, um mit einem thermischen Antriebsstrang (E) verbunden zu sein, und einer Abtriebswelle (GROUT), um eine Antriebsachse (DS) eines Fahrzeugs anzutreiben, und erste Verarbeitungsmittel (GRUN), ausgeführt, um ein optimales Übersetzungsverhältnis auf Grundlage eines Signals eines ersten Geschwindigkeitssensors (SPS1) zu ermitteln,
- eine Hauptantriebswelle (MS), angeordnet zwischen der Abtriebswelle (GROUT) und der Antriebsachse (DS),
- eine erste Hilfskupplung (PSC) zur Verbindung der Hauptantriebswelle und der Abtriebswelle,
- einen ersten Geschwindigkeitssensor (SPS1), der fest mit der Hauptantriebswelle verbunden ist, um eine entsprechende erste Geschwindigkeit zu messen,
- eine Hauptkupplung (MC), angeordnet zwischen dem thermischen Antriebsstrang (E) und der Antriebswelle,
wobei das Verfahren umfasst, ein Übersetzungsverhältnis vor Schließen der ersten Hilfskupplung (PSC) zur Umschaltung auszuwählen, basierend auf einer ersten vom ersten Geschwindigkeitssensor gemessenen Geschwindigkeit, und wobei das Verfahren weiter die folgenden Schritte umfasst:
- Aktivieren des thermischen Antriebsstrangs (E),
- Warten, bis ein optimales Übersetzungsverhältnis des Getriebes erreicht wurde, dann
- Überwachen einer zweiten Umdrehungsgeschwindigkeit der Abtriebswelle (GROUT) mittels eines dieser zugeordneten zweiten Geschwindigkeitssensors (SPS2), und Ermitteln der ersten Geschwindigkeit,
- Steuern einer Drehzahl des thermischen Antriebsstrangs, um eine Differenz zwischen der ersten und der zweiten Geschwindigkeit unter einen vordefinierten Schwellenwert zu bringen,
- Befehlen einer Schließung der ersten Sekundärkupplung (PSC),
wobei das Verfahren weiter **dadurch gekennzeichnet ist, dass** es den folgenden Schritt umfasst:
- Befehlen einer Schließung der Hauptkupplung (MC) unmittelbar nach Aktivierung des thermischen Antriebsstrangs und vor Ermittlung des optimalen Übersetzungsverhältnisses .

7. Hybrides Nutz- oder Industriefahrzeug, umfassend einen thermischen Antriebsstrang (E) und einen elektrischen Antriebsstrang (EE) und einen Antriebsstrang nach einem der Ansprüche 1 bis 5.

8. Computerprogramm, umfassend Programmcodemittel, ausgeführt, um alle Schritte des Anspruchs 6 auszuführen, wenn das Programm auf einem Computer ausgeführt wird.

9. Computerlesbares Speichermedium, umfassend ein darauf gespeichertes Programm, welches computerlesbare Speichermedium Programmcodemittel umfasst, die ausgeführt sind, um alle Schritte des Anspruchs 6 auszuführen, wenn das Programm auf einem Computer ausgeführt wird.

## Revendications

1. Transmission d'un véhicule hybride, en particulier d'un véhicule industriel ou commercial, la transmission comprenant :
- une boîte de vitesses (GR) ayant un arbre d'entrée (GRIN) apte à être raccordé à un groupe motopropulseur thermique (E) et un arbre de sortie (GROUT) pour entraîner un essieu moteur (DS) d'un véhicule et un premier moyen de traitement (GRUN) configuré pour identifier un rapport de transmission optimal sur la base d'un signal d'un premier capteur de vitesse (SPS1),
- un premier embrayage (MC) interposé entre ledit groupe motopropulseur thermique (E) et ledit arbre d'entrée (GRIN),
- un arbre de transmission principal (MS), interposé entre l'arbre de sortie (GROUT) et ledit essieu moteur (DS),
- un premier embrayage auxiliaire (PSC) pour interconnecter ledit arbre de transmission principal et ledit arbre de sortie,
dans laquelle ledit arbre de transmission principal peut être associé à un groupe motopropulseur électrique (EE) indépendamment d'un état d'ouverture ou de fermeture dudit premier embrayage auxiliaire (PSC) et dans laquelle ledit premier capteur de vitesse est raccordé stablement audit arbre de transmission principal (MS) pour mesurer une première vitesse liée ;
la transmission comprenant en outre une seconde unité de traitement (VCU) agencée pour réaliser les étapes suivantes en succession afin de commander une commutation entre un mode de transmission électrique pur et un mode thermique hybride ou pur :
- l'activation dudit groupe motopropulseur thermique (E),
- l'attente jusqu'à ce que ledit rapport de transmission optimal de la boîte de vitesses soit entré, puis
- la surveillance d'une seconde vitesse de rotation dudit arbre de sortie (GROUT) au moyen d'un second capteur de vitesse (SPS2) qui lui est associé et l'acquisition de ladite première vitesse,
- la régulation d'un régime du groupe motopropulseur thermique de manière à forcer une différence entre lesdites première et seconde vitesses à être inférieure à un seuil prédéterminé,
- la commande d'une fermeture dudit premier embrayage secondaire (PSC) ;
la transmission étant **caractérisée en ce que** ladite seconde unité de traitement est configurée pour commander une fermeture dudit embrayage principal (MC) immédiatement après l'activation dudit groupe motopropulseur thermique et avant ladite identification dudit rapport de transmission optimal.

2. Transmission selon la revendication 1, dans laquelle ladite seconde unité de traitement est configurée pour désactiver ledit groupe motopropulseur thermique (E), et dans laquelle ladite première unité de traitement (GRUN) est configurée pour sélectionner une position de point mort de la boîte de vitesses aussi longtemps que ledit groupe motopropulseur thermique est maintenu désactivé.

3. Transmission selon la revendication 1 ou 2, dans laquelle ledit groupe motopropulseur électrique (EE) est associé audit arbre de transmission principal au moyen d'une paire d'engrenages de transmission et d'un second embrayage auxiliaire (SSC) et dans laquelle ledit second moyen de traitement est configuré pour maintenir ledit second embrayage auxiliaire stablement fermé au cours d'un mode de transmission électrique pur et pour ouvrir ledit second embrayage auxiliaire uniquement après ladite fermeture dudit premier embrayage auxiliaire.

4. Transmission selon l'une quelconque des revendications 1 à 3, dans laquelle ladite seconde unité de traitement est en outre configurée pour réaliser une étape de la mise dudit groupe motopropulseur thermique à une vitesse de rotation prédéterminée après son activation pour permettre ladite identification dudit rapport de transmission optimal.

5. Transmission selon la revendication 4, dans laquelle ladite seconde unité de traitement est en outre configurée pour réaliser une étape préliminaire de l'acquisition d'un couple délivré par ledit groupe motopropulseur électrique (EE) et de la sélection de ladite vitesse de rotation prédéterminée du groupe motopropulseur thermique en fonction d'une carte de couple dudit groupe motopropulseur thermique, de manière à permettre audit groupe motopropulseur thermique de délivrer un couple au moins égal au couple délivré par le groupe motopropulseur électrique avant la fermeture du premier embrayage auxiliaire.

6. Procédé de régulation d'une procédure de commutation d'une transmission d'un véhicule hybride d'un mode électrique pur à un mode thermique hybride ou pur, en particulier d'un véhicule industriel ou commercial, la transmission comprenant :
- une boîte de vitesses (GR) ayant un arbre d'entrée (GRIN) apte à être raccordé à un groupe motopropulseur thermique (E) et un arbre de sortie (GROUT) pour entraîner un essieu moteur (DS) d'un véhicule et un premier moyen de traitement (GRUN) pour identifier un rapport de transmission optimal sur la base d'un signal d'un premier capteur de vitesse (SPS1),
- un arbre de transmission principal (MS), interposé entre l'arbre de sortie (GROUT) et ledit essieu moteur (DS),
- un premier embrayage auxiliaire (PSC) pour interconnecter ledit arbre de transmission principal et ledit arbre de sortie,
- un premier capteur de vitesse (SPS1) stablement raccordé audit arbre de transmission principal pour mesurer une première vitesse liée,
- un embrayage principal (MC) interposé entre ledit groupe motopropulseur thermique (E) et ledit arbre d'entrée,
le procédé comprenant la sélection dudit rapport de transmission sur la base d'une première vitesse mesurée par ledit premier capteur de vitesse, avant une fermeture dudit premier embrayage auxiliaire (PSC) pour réaliser ladite commutation, et
ledit procédé comprenant en outre les étapes suivantes :
- l'activation dudit groupe motopropulseur thermique (E),
- l'attente jusqu'à ce que ledit rapport de transmission optimal de la boîte de vitesses soit entré, puis
- la surveillance d'une seconde vitesse de rotation dudit arbre de sortie (GROUT) au moyen d'un second capteur de vitesse (SPS2) qui lui est associé et l'acquisition de ladite première vitesse,
- la régulation d'un régime du groupe motopropulseur thermique de manière à forcer une différence entre lesdites première et seconde vitesses à être inférieure à un seuil prédéterminé,
- la commande d'une fermeture dudit premier embrayage secondaire (PSC) ;
le procédé étant **caractérisé en ce qu'**il comprend en outre l'étape de
- la commande d'une fermeture dudit embrayage principal (MC) immédiatement après l'activation dudit groupe motopropulseur thermique et avant ladite identification dudit rapport de transmission optimal.

7. Véhicule hybride commercial ou industriel comprenant un groupe motopropulseur thermique (E) et un groupe motopropulseur électrique (EE) et une transmission selon l'une quelconque des revendications 1 à 5.

8. Programme informatique comprenant des moyens de code de programme informatique aptes à réaliser toutes les étapes de la revendication 6, lorsque ledit programme est exécuté sur un ordinateur.

9. Support lisible par ordinateur ayant un programme enregistré sur celui-ci, ledit support lisible par ordinateur comprenant des moyens de code de programme informatique aptes à réaliser toutes les étapes de la revendication 6, lorsque ledit programme est exécuté sur un ordinateur.
